# DEMANDE DE BREVET EUROPEEN

(11) **EP 1 865 206 A2**
(43) Date de publication de la demande: **12.12.2007**
(21) Numéro de dépôt: 07290652.2
(22) Date de dépôt: 22.05.2007
(51) Int. Cl.: F04D 29/04

(54) **Mécanisme d'entrainement par courroie**

(30) Priorité: 30.05.2006 FR 0651953
(71) Demandeur: S.N.R. ROULEMENTS, 74000 Annecy (FR)
(72) Inventeur: Beauprez, Jean-Michel, 74270 Menthonnex Sous Clermont (FR); Brisson, Sébastien, 74130 Contamine sur Arves (FR)
(74) Mandataire: Bredema

(57) **Abrégé**

Un mécanisme d'entraînement monté sur un bâti (10) muni d'un fût (16) portant au moins un chemin de roulement intérieur (24) définissant un axe de rotation (26), comporte un tambour monobloc (48) situé entièrement d'un premier côté d'un plan radial de référence (34). Ce tambour est pourvu d'une bande de roulement (50) pour coopérer avec une courroie d'entraînement, d'une ouverture dans laquelle est logé le fût, et d'au moins un chemin de roulement extérieur (54) situé en regard du chemin de roulement intérieur (24). Un arbre (30) solidaire d'un organe tournant (36) s'étendant d'un deuxième côté du plan géométrique de référence, traverse le fût et est fixé au tambour par des moyens de liaison (40), s'étendant radialement entre l'arbre et le tambour, et tangents à un plan géométrique (62) qui est perpendiculaire à l'axe de rotation (26) et est situé à plus grande distance du plan transversal de référence que les chemins de roulement.

## Description

### DOMAINE TECHNIQUE DE L'INVENTION

L'invention est relative à un mécanisme d'entraînement à courroie, et en particulier, bien que de manière non limitative, à un mécanisme permettant d'entraîner grâce à une courroie une roue à aubes de pompe à eau de véhicule automobile.

### ETAT DE LA TECHNIQUE ANTERIEURE

Dans le document FR 2.160.201 est décrite une pompe à eau de refroidissement pour moteur de véhicule automobile. Cette pompe comporte une roue à aubes disposée d'un côté d'un élément de boîtier formant, du côté opposé à la roue à aubes, un fût faisant saillie vers l'extérieur et y formant un siège pour une bague intérieure de roulement. La roue à aubes est solidaire d'un tronçon d'arbre qui sort du boîtier au niveau du fût et qui est relié à une jante de poulie par l'intermédiaire d'un bras radial. Sur la jante est montée une bague extérieure de roulement, les bagues intérieure et extérieure formant un palier situé axialement entre la roue à aube d'une part et le bras radial de liaison d'autre part. Le bras est fixé à l'arbre par soudage. De ce fait, la pompe forme avec l'élément de boîtier un sous-ensemble unitaire. Toutefois, le montage de ce sous-ensemble s'avère complexe car le soudage du tronçon d'arbre au bras de la poulie doit se faire une fois que le roulement a été monté. En particulier, l'alignement axial entre la roue à aubes et la poulie s'avère difficile à respecter lors du montage. Par ailleurs, le bras se trouve approximativement dans un plan radial médian de la jante et le palier se trouve confiné dans à une extrémité axiale de la jante. Il n'y a de place que pour une seule rangée de billes, alors même qu'une partie de la poulie se trouve en porte-à-faux. Le couple résultant des efforts appliqués par la courroie à la poulie tend à désaxer la poulie et avec elle le tronçon d'arbre et la roue à aubes. Par ailleurs, l'épaisseur cumulée de la jante de poulie et de la bague extérieure limite la place disponible pour les billes du palier. Pour toutes ces raisons, les charges que peut supporter ce dispositif sont donc limitées.

Dans le document EP 0 289 958 est par ailleurs décrite une pompe à eau de refroidissement pour moteur de véhicule automobile comportant une roue à aubes montée d'un côté d'un élément de boîtier, à l'extrémité d'un arbre solidaire d'une jante de poulie située de l'autre côté de l'élément de boîtier. La poulie est guidée par un palier à roulement. Le chemin de roulement extérieur du palier est formé directement à l'intérieur de la jante de poulie. Le chemin de roulement intérieur est formé sur un tronçon d'axe monté sur un flasque solidaire du boîtier de la pompe. La jante de poulie se trouve entre l'élément de boîtier et le flasque, ce qui augmente l'encombrement axial et radial du dispositif. De plus, l'alignement des pièces est très imparfait, ce qui impose de prendre des précautions au niveau des joints d'étanchéité entre l'arbre et l'élément de boîtier.

### EXPOSE DE L'INVENTION

L'invention vise donc à remédier aux inconvénients de l'état de la technique, de manière à proposer un dispositif peu encombrant, de montage aisé, supportant une charge importante et évitant les usures prématurées et les bruits dus à un mauvais alignement des pièces.

A cet effet, et suivant un premier aspect de l'invention, celle-ci a pour objet un mécanisme d'entraînement comportant:
- un bâti muni d'un fût portant au moins un chemin de roulement intérieur définissant un axe géométrique de rotation ;
- un tambour monobloc situé entièrement d'un premier côté d'un plan géométrique de référence perpendiculaire à l'axe géométrique de rotation et pourvu :
   - d'une bande de roulement pour coopérer avec une courroie d'entraînement,
   - d'une ouverture dans laquelle est logé le fût, et
   - d'au moins un chemin de roulement extérieur situé en regard du chemin de roulement intérieur,
- des corps roulants disposés sur les chemins de roulement pour former un roulement ;
- un arbre traversant le fût et solidaire d'un organe tournant s'étendant d'un deuxième côté du plan géométrique ; et
- des moyens de liaison de l'arbre au tambour, s'étendant radialement entre l'arbre et le tambour, et tangents à un plan géométrique qui est perpendiculaire à l'axe de rotation et est situé à plus grande distance du plan transversal de référence que les chemins de roulement.

Grâce à l'intégration du chemin de roulement extérieur au tambour de la poulie, il est possible d'accroître la distance entre chemins de roulements, et par conséquent d'augmenter la taille des corps roulants et avec elle la charge admissible du roulement. Le mécanisme reste compact en direction axiale, du fait que l'on dispose le roulement axialement entre les moyens de liaison de l'arbre au tambour et le bâti.

Selon un mode de réalisation, les moyens de liaison comprennent au moins une interface d'assemblage avec le tambour, située à plus grande distance du plan transversal que les chemins de roulement. Le positionnement de l'interface facilite le montage. Préférentiellement, la distance entre l'interface d'assemblage et l'axe de rotation est supérieure au diamètre primitif du roulement. La circonférence de l'interface est donc importante, ce qui contribue encore à faciliter le montage. Le montage des éléments du roulement, notamment des corps roulants, mais aussi le cas échéant de la cage et de joints d'étanchéité, s'en trouve également facilité.

L'assemblage des moyens de liaison au tambour peut être réalisé de différentes manière, notamment par sertissage, frettage, soudage, collage ou agrafage.

De manière alternative ou complémentaire à l'interface d'assemblage précédemment décrite, les moyens de liaison peuvent comprendre une interface d'assemblage avec l'arbre, située à une distance de l'axe de rotation inférieure au diamètre intérieur du fût. Du fait de son faible diamètre, l'interface d'assemblage avec l'arbre n'entrave pas l'insertion de l'arbre dans le fût. Préférentiellement, les moyens de liaison comprennent un manchon assemblé à l'arbre par emmanchement.

Selon un mode de réalisation, les moyens de liaison comprennent au moins une pièce intermédiaire assemblée à l'arbre et au tambour. Préférentiellement, les moyens de liaison sont constitués par une coupelle assemblée à l'arbre et au tambour. Cette coupelle peut avantageusement être en aluminium.

Alternativement, il est possible de prévoir un sous-ensemble formé de l'arbre et des moyens de liaison, sous-ensemble qui vient se fixer sur le tambour. Alternativement, il serait également possible de prévoir un sous-ensemble constitué du tambour et des moyens de liaison, qui vienne se fixer sur l'arbre.

Préférentiellement, le fût porte une bague intérieure sur laquelle est formé le chemin de roulement intérieur. Avantageusement, cette bague peut avoir un plan de symétrie radial, ce qui permet de la monter sans se soucier de son orientation.

Alternativement, on peut prévoir que le chemin de roulement intérieur soit formé directement sur le fût. On peut alors optimiser les épaisseurs du tambour et du fût, et le cas échéant augmenter la taille des billes.

_{.} Préférentiellement, le fût porte deux chemins de roulement intérieurs coaxiaux, le tambour monobloc est pourvu de deux chemins de roulement extérieurs situés en regards des deux chemins de roulement intérieurs, formant avec les corps roulants un roulement à deux rangées de corps roulants. On augmente ainsi considérablement la charge supportable par le mécanisme et la puissance que celui-ci peut transmettre. Avantageusement, les lignes de charge des corps roulants des deux rangées de corps roulants sont inclinées par rapport à un plan radial, ce qui confère une plus grande stabilité axiale au roulement.

Préférentiellement, les corps roulants sont des billes, bien que des rouleaux cylindriques ou coniques ou des aiguilles soient envisageables.

Selon un mode de réalisation particulièrement avantageux, on peut prévoir que le tambour monobloc ait un plan de symétrie radial.

Selon un autre aspect de l'invention, celle-ci a trait à une pompe à eau pourvue d'un mécanisme tel que décrit précédemment dont l'organe tournant est une roue à aubes.

L'organe tournant peut toutefois être tout type d'organe récepteur ou moteur, le mécanisme d'entraînement de l'invention pouvant transmettre de la puissance aussi bien de la courroie vers l'arbre que de l'arbre vers la courroie.

### BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels .
- la figure 1 illustre un mécanisme d'entraînement à poulie selon un premier mode de réalisation de l'invention, en coupe axiale ;
- la figure 2 illustre un mécanisme d'entraînement à poulie selon un deuxième mode de réalisation de l'invention, en coupe axiale ;
- la figure 3 illustre un mécanisme d'entraînement à poulie selon un troisième mode de réalisation de l'invention, en coupe axiale ;
- la figure 4 illustre un mécanisme d'entraînement à poulie selon un quatrième mode de réalisation de l'invention, en coupe axiale ;
- la figure 5 illustre un mécanisme d'entraînement à poulie selon un quatrième mode de réalisation de l'invention, en coupe axiale ; et
- la figure 6 illustre un mécanisme d'entraînement à poulie selon un sixième mode de réalisation de l'invention, en coupe axiale.

Pour alléger la présentation, les éléments communs aux différents modes de réalisation seront désignés par les mêmes signes de référence et leur description ne sera pas systématiquement répétée.

### DESCRIPTION DETAILLEE D'UN MODE DE REALISATION

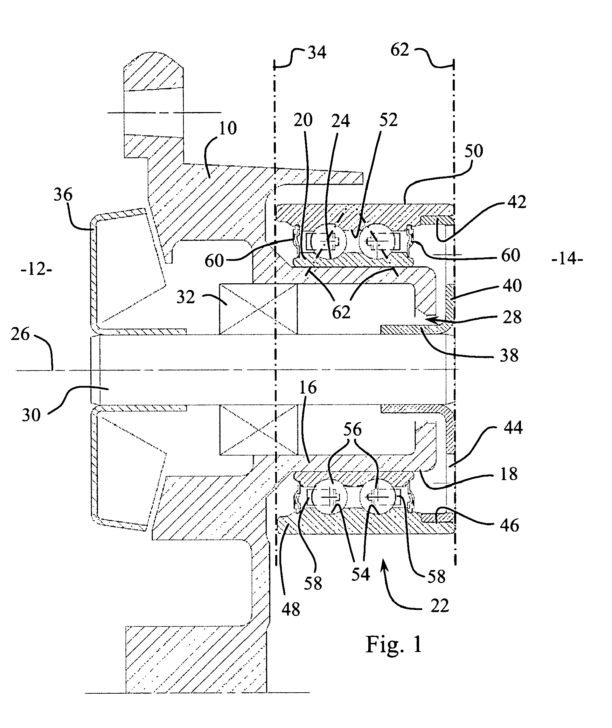

En référence à la figure 1, un bâti 10 constituant une interface entre un circuit d'eau 12 et l'extérieur 14 est pourvu d'un fût 16 formant une portée cylindrique 18 pour une bague intérieure 20 d'un roulement 22. La bague 20 est munie de deux chemins de roulement 24 qui définissent un axe géométrique de rotation 26 du mécanisme. Le fût 16 délimite également une ouverture axiale 28 permettant le passage d'un arbre 30. Un joint dynamique 32 assure une étanchéité entre l'arbre 30 et le bâti 10, de manière à éviter les fuites de liquide par l'ouverture. Le bâti 10 constitue un élément fixe qui permet de définir un plan géométrique radial de référence 34 traversé par l'arbre 30. À une extrémité de l'arbre 30, du côté gauche du plan sur la figure, est emmanchée une roue à aubes 36. À l'autre extrémité de l'arbre, du côté droit du plan de référence sur la figure, est emmanché un manchon 38 d'une coupelle annulaire 40 qui s'étend radialement vers l'extérieur et est pourvue d'un rebord d'extrémité 42. La coupelle est ajourée par des ouvertures 44 réparties sur sa surface. Le rebord 42 de la coupelle est emmanché sur une portée cylindrique intérieure 46 d'un tambour monobloc 48, de sorte que la coupelle 40 constitue un organe de liaison mécanique entre l'arbre 30 le tambour 48.

Le tambour 48, constitué d'une pièce en acier, est situé tout entier du côté du plan de référence 34 opposé à la roue à aubes, et est pourvu d'une face extérieure cylindrique 50 constituant une bande de roulement de poulie pour coopérer avec une courroie (non représentée). Le tambour 48 est creux et sa face intérieure 52 délimite une ouverture dans laquelle est inséré le fût 16. La face intérieure 52 du tambour constitue deux chemins de roulement extérieurs 54 situés en regard des chemins de roulement 24 de la bague intérieure 20. Ces chemins de roulement 24, 54 permettent de loger deux rangées de billes 56. Deux cages 58 assurent un espacement entre les billes de chaque rangée. Le roulement ainsi constitué est protégé de l'extérieur par deux joints d'étanchéité annulaires 60, montés sur le tambour de part et d'autre des chemins de roulement 24, 54 et frottant sur la bague intérieure 20. Les lignes de charges 62 des billes des deux rangées sont de préférence inclinées par rapport à un plan radial, et coupent l'axe de rotation du tambour en deux points situés dans deux plans radiaux qui encadrent les chemins de roulement.

Le montage du mécanisme de la figure 1 est particulièrement simple. Le roulement 22, constitué de la bague intérieure 20, du tambour 48, des deux cages 58, des deux rangées de billes 56 et des deux joints d'étanchéité 60 est monté dans une première étape. Ce montage est facilité par le fait que le tambour est largement ouvert à ses deux extrémités, la portée 46 ayant un diamètre plus grand que le diamètre primitif des deux rangées de billes, et même plus grand que le diamètre intérieur des pistes de roulement. Puis la bague intérieure 20 est emmanchée sur le fût. Enfin, le sous-ensemble constitué de l'arbre 30 et de la coupelle 40 est emmanché sur l'interface constituée par la portée cylindrique intérieure 46 du tambour 48. Enfin la roue à aubes 36 est emmanchée à l'extrémité de l'arbre 30. Comme on le voit sur la figure, les chemins de roulement 24, 54 se trouvent entre le plan de référence 34 et un plan radial 62 tangent à la coupelle.

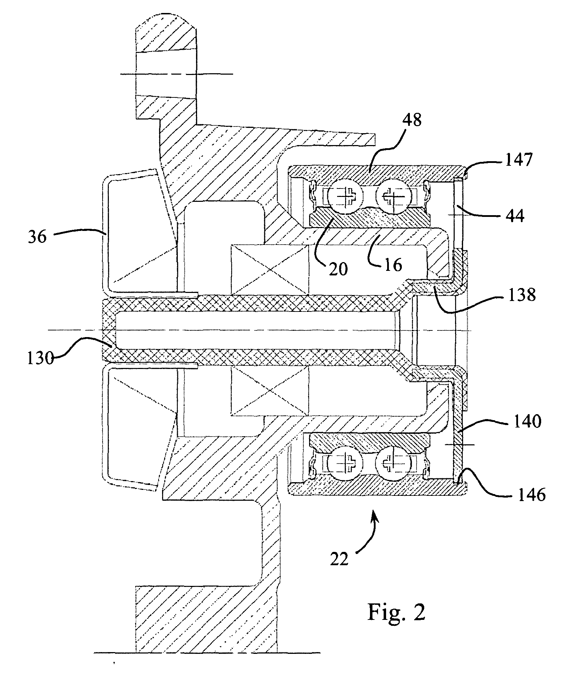

Sur la figure 2 est représenté un deuxième mode de réalisation de l'invention, qui diffère du premier mode essentiellement par l'arbre et les moyens de fixation de l'arbre au tambour. En effet, l'arbre est ici constitué par une pièce creuse 130 en polyamide 6.6 chargé, portant à une extrémité la roue à aube 36 et pourvue à l'extrémité opposée d'un insert en tôle 138 qui fait saillie radialement hors de la pièce en polyamide vers le tambour 48 en formant un disque 140. Le tambour 48 est pourvu sur sa face intérieure d'une gorge 146 limitée par un rebord d'extrémité 147. La périphérie radiale de l'insert 140 est ainsi insérée en force et se déforme élastiquement au passage du rebord 147 avant de se positionner dans la gorge 146. Le disque 140 peut naturellement être pourvu d'ouvertures 44 pour limiter la quantité de matière et la masse.

Le montage du dispositif de la figure 2 est similaire à celui du premier mode de réalisation. Dans un premier temps, le roulement 22 est monté, avant d'y fixer le sous-ensemble constitué par l'arbre 130 et son insert, puis de fixer la roue à aubes 36 à l'extrémité libre de l'arbre 130.

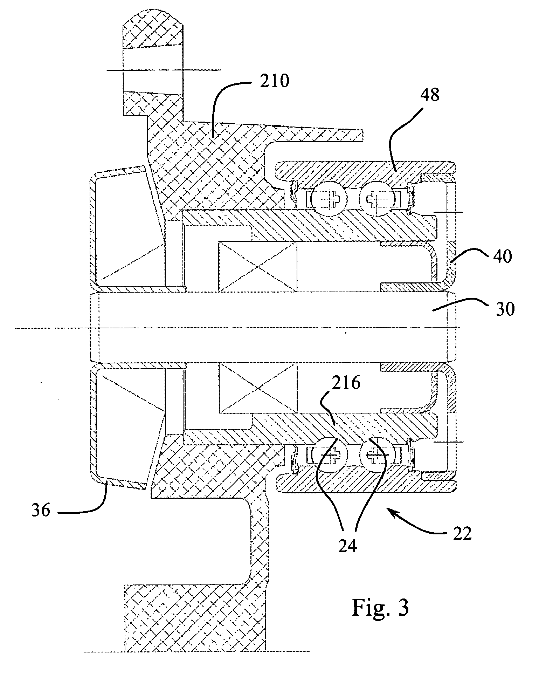

Sur la figure 3 est représenté un troisième mode de réalisation de l'invention. Ce mode de réalisation diffère de celui de la figure 1 essentiellement par l'intégration des chemins de roulement intérieurs 24 au fût 216, qui est emmanché dans le bâti 210.

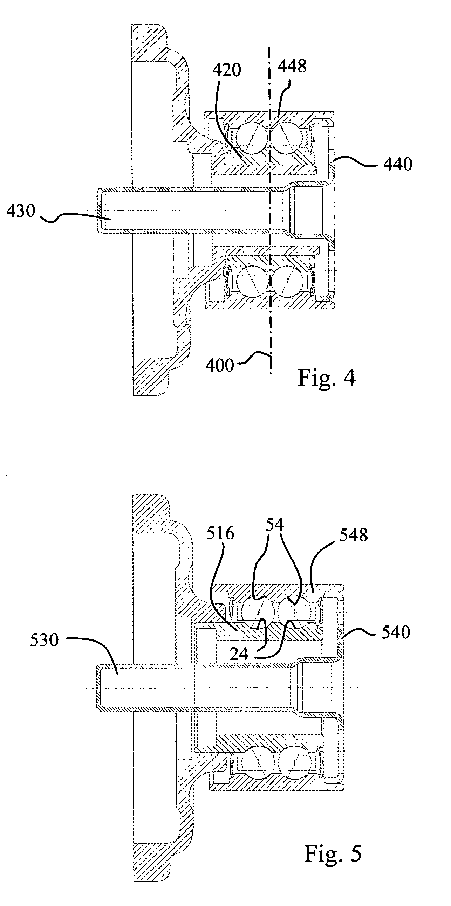

Sur la figure 4 est représenté un quatrième mode de réalisation de l'invention, qui se distingue des précédents par le fait que le tambour 448 et la bague intérieure 420 sont symétriques par rapport à un plan radial médian 400, et par le fait que l'arbre 430 est constitué par une pièce monobloc en tôle emboutie, s'évasant à une extrémité pour former une coupelle 440 fixée au tambour 448 de manière similaire au premier mode de réalisation. L'homme du métier comprendra aisément que le montage s'en trouve facilité, par la réduction du nombre de pièce, et par le fait qu'il n'est plus nécessaire de repérer le sens de montage du roulement, ce qui permet une plus grande automatisation.

Sur la figure 5 est représenté un cinquième mode de réalisation de l'invention, qui combine un tambour symétrique 548 similaire à celui du quatrième mode de réalisation, un fût 516 intégrant les chemins de roulement 24 similaire au troisième mode de réalisation, et un sous-ensemble constitué d'une pièce unique en tôle emboutie formant l'arbre 530 et une extension radiale 540 de liaison avec le tambour 548, similaire au quatrième mode de réalisation. On minimise ainsi le nombre de pièces.

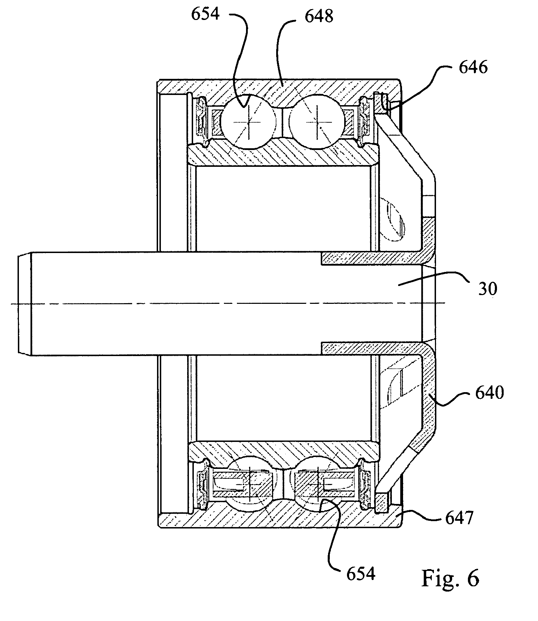

Sur la figure 6 est représenté un sixième mode de réalisation de l'invention, dont l'intérêt est d'illustrer un mode particulier de solidarisation de l'axe 30 au tambour 648 par déformation de matière. Un flasque 640 est tout d'abord emmanché à l'extrémité de l'arbre. La périphérie du flasque est positionnée au contact d'une portée 646 à l'extrémité du tambour. Un outil vient ensuite repousser le rebord 647 du tambour sur le flasque.

Naturellement, diverses modifications sont possibles.

La bande de roulement peut avoir toute forme adaptée à une courroie d'entraînement, par exemple une forme tronconique ou à plusieurs troncs de cônes. Elle peut être le cas échéant pourvue de stries ou autres reliefs assurant une meilleure coopération avec la courroie. Le terme courroie utilisé dans l'ensemble de la demande doit être compris de manière générique comme incluant tout type de liaison souple sans fin, de section quelconque.

L'invention n'est pas limitée à des pompes à eau, la roue à aubes pouvant être remplacée par tout type d'organe récepteur destiné à être solidarisé à une poulie entraînée par une courroie. La roue à aubes peut également être remplacée par un organe moteur entraînant l'arbre et le tambour de poulie, et destiné à entraîner la courroie.

Les moyens de liaison entre l'arbre et le tambour peuvent être de tout type assurant la transmission du couple, par exemple des rayons ou des bras. Les organes de fixation peuvent être rigides, ou permettre une certaine élasticité en torsion.

La fixation de ces moyens de liaison au tambour peut se faire par tout moyen, notamment par sertissage, emmanchement à chaud ou à froid, collage ou soudage. L'interface de fixation entre le tambour et les moyens de liaison peut être lisse ou pourvue de reliefs, par exemple de cannelures.

L'homme du métier saura en outre combiner entre eux les divers mode de réalisation pour constituer d'autre variantes.

## Revendications

1. Mécanisme d'entraînement comportant :
- un bâti (10) muni d'un fût (16) portant au moins un chemin de roulement intérieur (24) définissant un axe géométrique de rotation (26) ;
- un tambour monobloc (48) situé entièrement d'un premier côté d'un plan géométrique de référence (34) perpendiculaire à l'axe géométrique de rotation et pourvu :
- d'une bande de roulement (50) pour coopérer avec une courroie d'entraînement,
- d'une ouverture dans laquelle est logé le fût, et
- d'au moins un chemin de roulement extérieur (54) situé en regard du chemin de roulement intérieur (24),
- des corps roulants (56) disposés sur les chemins de roulement pour former un roulement (22) ;
- un arbre (30, 130, 430, 530) traversant le fût et solidaire d'un organe tournant (36) s'étendant d'un deuxième côté du plan géométrique de référence ; et
- des moyens de liaison (40, 140, 440, 540) de l'arbre au tambour, s'étendant radialement entre l'arbre et le tambour, et tangents à un plan géométrique (62) qui est perpendiculaire à l'axe de rotation (26) et est situé à plus grande distance du plan transversal de référence que les chemins de roulement.

2. Mécanisme d'entraînement selon la revendication 1, dans lequel les moyens de liaison comprennent au moins une interface d'assemblage (46) avec le tambour, située à plus grande distance du plan transversal de référence que les chemins de roulement.

3. Mécanisme selon la revendication 2, dans lequel la distance entre l'interface d'assemblage et l'axe de rotation est supérieure au diamètre primitif du roulement.

4. Mécanisme d'entraînement selon la revendication 2 ou la revendication 3, dans lequel les moyens de liaison sont assemblés au tambour par sertissage, frettage, soudage, collage ou agrafage.

5. Mécanisme d'entraînement selon l'une quelconque des revendications précédentes, dans lequel les moyens de liaison comprennent au moins une interface d'assemblage (38, 138) avec l'arbre, située à une distance de l'axe de rotation inférieure au diamètre intérieur du fût.

6. Mécanisme selon la revendication 5, dans lequel les moyens de liaison comprennent un manchon (38) assemblé à l'arbre par emmanchement.

7. Mécanisme selon l'une des revendications précédentes, dans lequel les moyens de liaison comprennent au moins une pièce intermédiaire (40) assemblée à l'arbre et au tambour.

8. Mécanisme selon la revendication 7, dans lequel les moyens de liaison sont constitués par une coupelle (40) assemblée à l'arbre et au tambour.

9. Mécanisme selon l'une quelconque des revendications précédentes, dans lequel le fût porte une bague intérieure (20) sur laquelle est formé le chemin de roulement intérieur.

10. Mécanisme selon la revendication 9, dans lequel la bague intérieure à un plan de symétrie radial médian (400).

11. Mécanisme selon l'une quelconque des revendications 1 à 8, dans lequel le chemin de roulement intérieur est formé directement sur le fût.

12. Mécanisme d'entraînement selon l'une quelconque des revendications précédentes, dans lequel le fût porte deux chemins de roulement intérieurs coaxiaux (24), le tambour monobloc est pourvu de deux chemins de roulement extérieurs (54) situés en regards des deux chemins de roulement intérieurs et formant avec les corps roulants un roulement (22) à deux rangées de corps roulants.

13. Mécanisme d'entraînement selon l'une quelconque des revendications précédentes, dans lequel les lignes de charge (62) des corps roulants des deux rangées de corps roulants sont inclinées par rapport au plan de référence.

14. Mécanisme selon l'une quelconque des revendications précédentes, dans lequel les corps roulants sont des billes (56).

15. Mécanisme selon l'une quelconque des revendications précédentes, dans lequel le tambour monobloc a un plan de symétrie radial médian (400).

16. Mécanisme selon l'une quelconque des revendications précédentes, dans lequel le tambour est constitué d'une pièce en acier (48).

17. Pompe à eau de véhicule automobile, pourvue d'un mécanisme d'entraînement selon l'une quelconque des revendications précédentes, l'organe tournant étant constitué par une roue à aubes (36).
